# EUROPEAN PATENT SPECIFICATION

(11) **EP 1 918 542 B1**
(45) Date of publication and mention of the grant of the patent: **22.12.2010**
(21) Application number: 06023030.7
(22) Date of filing: 06.11.2006
(51) Int. Cl.: F01N 3/025, F01N 9/00, F01N 11/00, F02D 41/02, F02D 41/40

(54) **Operating method for a particulate filter, data processor program product and control apparatus therefore**
Regelungsverfahren eines Partikelfilters, Datenverarbeitungsprogramm und Steuerungsanlage dafür
Procédé de gestion du fonctionnement d'un filtre à particules, processeur de données et dispositif de gestion du procédé

(43) Date of publication of application: 07.05.2008
(73) Proprietor: GM Global Technology Operations, Inc., Detroit, MI 48265-3000 (US)
(72) Inventor: Barbero, Simone, 10139 Torino (IT); Cassani, Stefano, 10128 Torino (IT); Mercuri, Davide, 10139 Torino (IT); Rellecati, Pierluigi, 10140 Curniana (IT)
(74) Representative: Strauss, Peter

(56) References cited:
- EP-A- 1 541 837
- EP-A- 1 561 922
- EP-A1- 1 431 530
- EP-A2- 1 426 591
- FR-A- 2 865 768
- US-A1- 2005 022 505

## Description

The present invention relates to a method for operating a particulate filter in the exhaust system of an internal combustion engine, to a data processor program product and to a control apparatus for carrying out the method.

Filters capable of reducing emission of particulate matter from diesel engines have attracted considerable public interest in recent times. Such filters generally comprise a filter body of porous material within a casing, often with dead-end holes extending into the filter body from opposite sites thereof. In operation, exhaust gas enters the dead-end holes from one side of the filter body and passes through the filter material into the holes of the other side, whereby the particulate matter carried by the exhaust gas is retained at the surface and in the pores of the filter body. The accumulating particulate matter causes a pressure drop across the filter to increase. If the pressure drop becomes excessive, it may cause the filter body to crack, rendering the filter ineffective, or it may affect the efficiency of the engine.

In order to avoid excessive clogging of the filter, the particulate matter must be removed when a critical amount of it has accumulated in the filter. This process is generally referred to as regeneration. Conventionally, regeneration is achieved by heating the filter to a target temperature at which the accumulated particulate matter burns off, leaving the filter body clean again. It is known to heat the filter by injecting excess fuel into a combustion chamber of the engine when the piston of the combustion chamber has passed its top dead centre position, and fuel that was injected before the top dead centre position is already burnt. The fuel injected after the top dead centre position, referred to as post-injected fuel in the following description, is ejected from the combustion chamber unburnt, and reaches an exhaust catalyst which is conventionally provided for degrading residual hydrocarbons and nitric oxides that are formed in the combustion process of the engine. Such a catalyst is also effective to oxidise the post-injected fuel. The catalytic oxidation of the post-injected fuel heats the exhaust gas which reaches the particulate filter, whereby the latter is heated.

This conventional technology has a number of inconveniences. Combustion of the particulate matter will generally not occur homogeneously all over the filter body, but will start at a small number of foci and spread from there through the filter body. Since the combustion of the particulate matter contributes to the heating of the filter, the temperature will be distributed unevenly in the filter, i.e. it is likely that parts of it will be hotter than a filter the temperature detected by a local sensor. Accordingly, the target temperature must be set low enough to prevent filter damage by local overheating. However, if the target temperature is low, combustion will take a long time to start, and the longer the regeneration lasts, the more fuel is consumed for maintaining the filter at the required temperature. Another problem is that when the particle combustion process has started, and particle concentration is still high, a moderate amount of heating power supplied from outside may be sufficient to keep the combustion going, but when the concentration of particles decreases, combustion contributes less heat, and if the heat supplied from outside is insufficient, the combustion may come to an end before the particles are removed completely.

Further, if the target temperature is constant during the regeneration, there is a problem in that the discrepancy between the target temperature and a measured filter temperature will be very high when the regeneration is started and the filter is still at its normal operation temperature. A fast-reacting control scheme will therefore tend to supply excessive heat at the beginning of the regeneration, which is likely to cause the filter temperature to overshoot over the target temperature. If control is made slow in order to avoid such an overshoot, there is a risk that it will not be able to react properly to changes of external conditions during regeneration.

It has been suggested to solve this problem by initially controlling the filter temperature in an open loop, i.e. by supplying a predetermined amount of external heating power which is expected to bring the filter reasonably close to the target temperature within a predetermined time interval, so that after this time interval, the filter temperature can be placed under closed loop control. Since the filter must have reached a fairly constant temperature under open loop control in order to avoid closed loop control from oscillating, it takes a rather long time to start the combustion process.

Filter regeneration methods in which a target temperature of the filter varies during regeneration are knowm from FR 2 865 768 A, EP 1 426 591 A2, EP 1 431 530 A1, US 2005/022505 or EP 1 561 922 A.

The object of the present invention is to provide an operating method for a particulate filter which enables fast and/or complete regeneration, a data processor program product and a control apparatus for carrying out the method.

This object is achieved by a method for operating a particulate filter in the exhaust system of an internal combustion engine, comprising a filtering phase in which particles from exhaust gas of the combustion engine are collected in the filter, and a regenerating phase in which a current temperature of the filter is measured and heating power applied to the filter is controlled based on a deviation between the measured temperature and a target value for the temperature of the filter so as to minimize said deviation, in order to burn particles collected in the filter, in which during that regenerating phase the target temperature is varied with time. More specifically, the regenerating phase comprises a filter cleaning phase in which the filter is held in a temperature range in which the collected particles will burn, and a heating phase in which the filter is heated from a filtering phase temperature to a temperature in said temperature range, and in said heating phase the target value is gradually increased from a filtering phase temperature (which may be the current value of the filter temperature or a typical value) to a temperature in said range. Since the target value is gradually increased, the deviation between it and the actual filter temperature does not become too large, so that the heating power controlled according to this deviation does not become excessive, and an overshoot of the filter temperature can be avoided. Since it is not necessary to wait for the filter temperature to stabilize in an open loop control phase, a temperature at which the collected particles start to burn can be reached in a short time.

The rate at which the filter can reasonably be heated depends on the running conditions of the vehicle. If these are unfavourable for fast heating of the filter, e. g. because the vehicle is running slowly at a low load, it is preferred that the target temperature is held constant if the deviation between target and measured temperature exceeds a given threshold. In this way, the filter may take longer to reach an appropriate regeneration temperature under unfavourable conditions, but the amount of power invested for heating the filter is limited to a reasonable value. This is particularly useful if the filter is heated by post-injection of fuel, since post-injection of excessive amounts of fuel may cause an undesirable dilution of engine lubricant by fuel and hydrocarbon emission from the exhaust system.

Further, the target temperature may be gradually raised during a main portion of the filter cleaning phase. In this way, account is taken of the fact that when the concentration of particles in the filter decreases during regeneration, an increased amount of external heating power is required to keep the combustion process going.

It has proved useful to increase the filter temperature during said main portion of the filter cleaning phase by at least 100°C, preferably at least 150°C.

At the beginning of the main portion of the filter cleaning phase, the filter temperature may be in a range of 530 to 580°C.

At the end of said main portion, the filter temperature may be above 700°C, preferably around 750°C.

In order to facilitate the start of the combustion, the filter cleaning phase preferably comprises a main portion and an ignition portion prior to said main portion, and the target temperature of the filter is set lower at the beginning of the main portion than in the ignition portion. This feature takes account of the fact that once the process of burning the collected particles has started, heat generated by burning part of the particles helps to bring the remaining particles to a temperature at which they in turn will burn, so that this heat need no longer be supplied from outside. Accordingly the amount of post-injected fuel needed for cleaning the filter is decreased by lowering the filter temperature at the beginning of the main portion without affecting the efficiency of the regeneration.

A duration of the ignition portion of not more than one minute, preferably approximately 30 s, was found to be adequate.

Preferably, the filter temperature during the ignition portion is at least 50°C higher than at the beginning of the main portion.

Since according to the present invention the target temperature varies during regeneration, it should be pointed out that in case that the regeneration procedure has been interrupted, e. g. due to the engine being turned off, the regeneration is not simply resumed where it was broken off when the engine is turned on again, but is re-started from the beginning, in particular if the regeneration procedure comprises a heating phase or an ignition phase as defined above, these are repeated upon restart.

If the filter cleaning phase has been interrupted, it is preferably decided to restart or not to restart the filter cleaning phase according to an estimated particle load at the time of interruption. This may be done directly, e.g. by calculating the particle load at the time of interruption; it can also be done indirectly, e.g. by judging whether the duration of the cleaning phase before interruption is more than a predetermined fraction of the expected total duration of the cleaning phase.

The filter temperature may be measured at an input port of the filter, so that it is not substantially affected by heat generated by particle combustion in the filter.

The filter may be heated by burning residual fuel contained in the exhaust gas from the engine in a catalyst located in the exhaust system between the engine and the particulate filter.

In order to avoid large quantities of fuel being spent in filter regeneration if the engine is in a low idle state, the method of the invention advantageously comprises a step of judging whether the engine is in a low idle state or in a load state, and, if the engine is detected to be in the low idle state, setting the target temperature lower than in the load state. In this way, during the low idle state, the speed at which the particles are burnt may be decreased, or particle combustion may come to a halt, but when the engine returns to the load state, filter regeneration may be resumed quickly and at low fuel expense. In this way undesirable dilution of engine lubricant by fuel is avoided, too.

It is also advantageous to gradually decrease the target temperature during the low idle state. An abrupt change of the target temperature would cause an abrupt variation of the quantity of post-injected fuel, which might cause a high level of hydrocarbon emission from the exhaust system. For the same reason, it is advisable to increase the target temperature gradually when the engine returns from the low idle state to the load state and regeneration is resumed.

The object is further achieved by a data processor program product comprising a data carrier in which program instructions for enabling a data processor to carry out the above-defined method are recorded in machine-readable form.

Further, the object of the invention is achieved by an apparatus for controlling regeneration of a particulate filter in the exhaust system of an internal combustion engine, comprising heating power control means for controlling heating power applied to the filter based on a deviation between a measured temperature and a target value for the temperature of the filter so as to minimize said deviation, in order to burn particles collected in the filter, characterized in that said control means is adapted to vary with time the target temperature during regeneration of the filter.

Further features and advantages of the invention will become apparent from the subsequent description of embodiments thereof referring to the appended drawings.
- Fig. 1: is a diagram of a combustion engine in which the present invention is implemented;
- Fig. 2: is a block diagram of part of the logical structure of the electronic control unit shown in Fig. 1;
- Fig. 3: is a graph illustrating the development of target temperature and measured temperature of the particulate filter of Fig. 1 during a filter regeneration; and
- Fig. 4: is a graph analogous to Fig. 3 illustrating an interrupted regeneration process.

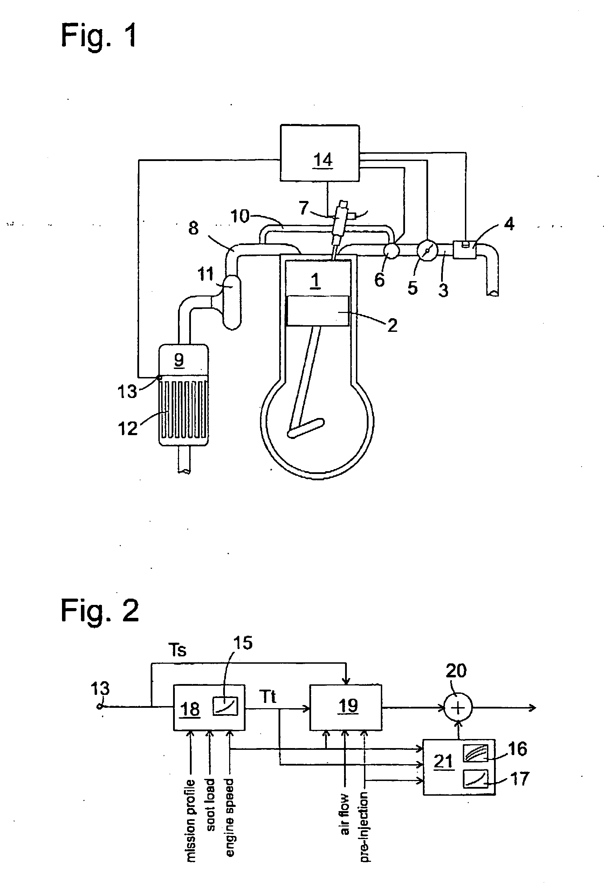

Fig. 1 schematically illustrates a Diesel engine and its exhaust system, to which the present invention is applicable. The engine has a plurality of combustion chambers 1 in which a piston 2 reciprocates, and to which fresh air is supplied by an intake manifold 3. Along the intake manifold 3, there is located an air flow meter 4, a throttle valve 5 and an exhaust gas recirculation (EGR) valve 6. A fuel injection valve 7 is connected to a common rail, not shown.

An exhaust duct 8 extends from the combustion chambers 1 to an exhaust catalyst 9. An exhaust recirculation line 10 extends from exhaust duct 8 to EGR valve 6. A turbine 11 for driving an intake air compressor, not shown, may be located in exhaust duct 8.

In the schematic representation of Fig. 1, the exhaust catalyst 9 is represented as a single block. In practice, it may be divided into two separate units, a pre-catalyst which is small-sized and located physically close to the engine in order to reach operating temperature quickly after engine start-up, and a main catalyst located further downstream, of larger size and capable of processing the exhaust gas from the engine without overheating even at high engine loads.

Catalyst 9 degrades residual hydrocarbons, nitric oxides and carbon monoxide contained in the exhaust stream. Particles such as soot contained in the exhaust stream pass catalyst 9 essentially unaffected.

A particulate filter 12 is located downstream of catalyst 9 for collecting these particles from the exhaust stream. Particulate filter 12 is placed in a common casing together with the main catalyst, in order to enable efficient heating of particulate filter 12 by heat from catalytic reactions occurring in catalyst 9.

Particulate filter 12 comprises a body of porous material into which dead-end holes extend from upstream and downstream sides thereof, respectively. When the engine is running, soot particles are at first collected within the pores of filter material, and, in a later stage, a layer of collected particles begins to build up on the walls of the upstream holes.

The ECU 14 controls fuel injection into the combustion chamber 1 by injection valve 7, throttle valve 5 position and the amount of exhaust gas recirculation at EGR valve 6 based on an air flow rate detected at air flow meter 4, engine speed, accelerator pedal position, etc. Since these functions of the ECU 14 are known to the man of the art, they need not be described further here.

The ECU 14 monitors the clogging state of particulate filter 12 essentially based on the history of running conditions of the engine. The rate at which particles are generated by the engine is a function mainly of engine speed and torque. In addition to these two, one or more of the following parameters may be taken into account.: engine temperature, ambient temperature, gear, vehicle speed. By monitoring these parameters as a function.of time, the ECU 14 estimates the particle generation rate of the engine and, by integrating this particle generation rate, it obtains an estimate of the particle load in filter 12 at any given time. If this particle load exceeds a predetermined threshold, a regeneration of the particulate filter 12 is necessary, in which the collected particles are burnt. In order to raise the temperature of particulate filter 12 to a level necessary for burning the particles, ECU 14 controls fuel injection valve 7 to inject a needed quantity of fuel into combustion chamber 1 when its piston 2 has passed its top dead centre position. This post-injected fuel is purged from combustion chamber 1 without being burnt, so that it is oxidised in catalyst 9, thus increasing the temperature of the exhaust gas arriving at particulate filter 12. This temperature Ts is monitored by a temperature sensor 13 at the upstream side of filter 12.

Fig. 2 illustrates the structure of a portion of ECU 14 which determines the amount of post-injected fuel. As a skilled person will immediately recognize, the components shown in this Fig. may be implemented in hard-or software. Quite conventionally, a characteristic 16 is stored in the an open-loop controller unit 21 of ECU 14 which indicates an amount of post-injected fuel per engine stroke necessary for achieving a typical regeneration temperature of filter 12 of e. g. 650°C as a function of engine speed and pre-injected fuel amount, i. e. the amount of fuel which is injected before top dead centre position and which is actually burnt in combustion chamber 1. According to the invention, there is also stored a second characteristic 17 which indicates a percentage of the post injection quantity given by the first characteristic 16 which is needed for achieving other temperatures of filter 12.

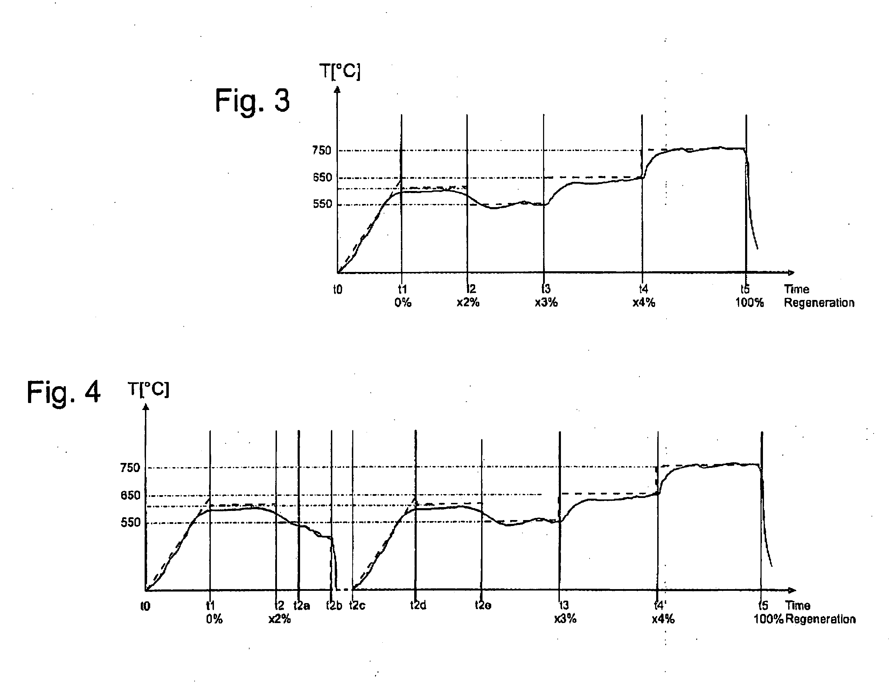

The ECU 14 comprises a target temperature setting unit 18 which determines a target temperature Tt to which the filter 12 is to be heated during regeneration based on a current filter temperature from temperature sensor 13, engine speed, an estimated current soot load of filter 12 and a mission profile of the vehicle in a way which will be explained in more detail later referring to Fig. 3 and 4. Temperature setting unit 18 stores a third characteristic 15 which specifies soot loss rates or total soot loss during regeneration. Soot loss rates or soot loss may be specified in characteristic 15 as a function of filter temperature Ts, air flow, total fuel injection quantities (pre- plus post-injection) eLc., or, alternatively, as a function of time and mission profile, based on the assumption that the filter temperature is controlled to follow a predetermined curve during regeneration.

The target temperature Tt determined by unit 18 and the current temperature Ts from sensor 13 are supplied to a closed loop controller unit 19 which determines a post injection correction amount based on these two temperatures, engine air flow and/or engine speed and fuel pre-injection amount. Adder 20 adds this correction amount to an open loop post-injection quantity determined by open loop controller unit 21 based on engine speed, pre-injection amount and target temperature using first and second characteristics 16, 17. The total post-injection quantity defined by the output of adder 20 is metered into combustion chamber 1 at each engine stroke.

Fig. 3 illustrates the development of the target temperature determined by unit 18 and of the current filter temperature measured by sensor 13 during a filter regeneration procedure. The time at which ECU 14 starts the regeneration procedure is referred to as t0. Regeneration starts with a filter warming-up phase from t0 to t1. At t0, target temperature setting unit 18 sets a target temperature Tt for the filter 12 identical to the current temperature Ts from sensor 13. From this starting value, target temperature Tt is ramped up to e. g. 650°C at time t1. Between t0 and t1, the target temperature Tt may increase in a linear fashion with time, or the rate of increase of Tt may slow down at high temperatures Ts, in order to avoid any overshoot of the filter temperature Ts over the target temperature Tt at t1. The rate at which the target temperature Tt is increased during the warming-up phase is determined based on the mission profile of the vehicle, i. e. if the ECU 14 has observed before t0 that the vehicle is running intermittently at low engine speed and torque, corresponding e. g. to urban stop-and-go traffic, the increase rate of the target temperature is set lower than in case of the vehicle running at high speed and torque corresponding e. g. to highway driving. In this way, a fast rise of filter temperature Ts is achieved during highway driving, whereas in urban traffic, where such a fast temperature rise would imply high post-injection quantities leading to undesirable oil dilution and to a high rate of hydrocarbon emission from the exhaust system, post-injection quantities are kept reasonably low, allowing a longer time for heating the filter 12.

By continuously increasing the target temperature Tt, closed loop control of the post-injection quantity can be carried out right from the beginning of the regeneration procedure without a risk of excessive post-injection quantities causing oil dilution and a filter temperature overshoot, and the actual filter temperature Ts follows the target temperature Tt closely at all times. In this way, an appropriate filter temperature for burning the collected soot is reached quickly and reliably.

As a safety measure, it can be provided that the target temperature setting unit 18 continuously monitors the current filter temperature Ts from sensor 13 and interrupts the increase of the target temperature Tt in case of the difference between the two temperatures Tt, Ts exceeding a predetermined threshold. This measure is also effective to prevent post-injection of excessive quantities of fuel.

At time t1, target temperature setting unit 18 decreases the target temperature slightly, in this example from 650°C to 630°C. Setting the target temperature at the end of the warming-up phase slightly higher than in the subsequent ignition phase starting at time t1 is useful to bring the filter temperature quickly to the level which is actually desired for the ignition phase.

The duration of the ignition phase may be time controlled or soot load controlled, i. e. according to a first embodiment of the invention the duration t2-t1 of the ignition phase is predetermined, and according to a second embodiment the ECU 14 terminates the ignition phase at a time t2 when the target temperature setting unit 18 estimates, based on characteristic 15, that a given percentage x2 of soot has been removed. Soot combustion may now be assumed to be under progress, so that the heat generated by it keeps the combustion process going, even if the heat of the exhaust gas into filter 12 is reduced. Accordingly, target temperature setting unit 18 decreases the target temperature at time t2 to e. g. 550 °C. This measure not only avoids unnecessary consumption of fuel, it is also effective to control the speed of the soot combustion process and prevents local overheating of the filter body in a region where the soot concentration is high.

When the soot in filter 12 is gradually consumed, its combustion contributes less and less heat, so that in order to avoid a premature stop of the regeneration, unit 18 increases the target temperature to 650°C again at instant t3 (i.e. when a predetermined time t3-t2 has elapsed since instant t2 according to the first embodiment, or when the target temperature setting unit 18 estimates that a percentage x3 of the soot is consumed, according to the second embodiment).

A further increase of the target temperature, and, in consequence, of the filter temperature at sensor 13 occurs at instant t4 (or percentage x4). By setting the target temperature in the final stage of the regeneration lasting from t4 to t5 at a rather high value of 750°C, the soot is removed very completely. It should be noted that near the end of the regeneration process the target temperature can be raised to a value which, at the beginning of the regeneration, might cause the filter to overheat in a region where a large quantity of soot is burnt in a short time.

When a regeneration is started, there is always a risk of vehicle running conditions not being adequate for regeneration while the regeneration process lasts. Such a case will be discussed referring to Fig. 4, which shows a graph of target and actual filter temperatures Ts, Tt analogous to that of Fig. 3. Warming-up and ignition phases of the regeneration process of Fig. 4 are identical to those of Fig. 3. At..an instant t2a, the vehicle enters a low idle state, which is not well suited for regeneration due to the high quantity of post-injected fuel necessary to maintain the target temperature Tt. With a predetermined delay after entering the low idle state, the unit 18 therefore gradually decreases the target temperature Tt. This reduces the post-injection quantity, but also the speed at which the soot is being burnt in the filter. However, since the filter 12 is kept warm, regeneration may be resumed quickly, as soon as the vehicle leaves the low idle state and runs under higher load again. In the case of Fig. 4, however, the engine is switched off at time t2b, and the filter 12 cools down.

At instant t2b, or at instant t2c, when the engine is switched on again, ECU 14 calculates the residual quantity of soot that is left in filter 12 based on characteristic 15. If the regeneration before switch-off lasted long enough to remove a substantial fraction of the soot, it is not urgent to restart regeneration. In that case, ECU 14 reverts to its normal operation mode of monitoring the particle load in filter 12 by integrating the particle generation rate, taking the above-mentioned residual quantity as a starting value, and regeneration is restarted as described referring to Fig. 3 when this particle load exceeds its predetermined threshold. On the other hand, if the regeneration time before t2a was too short to remove a predetermined substantial amount of soot, or if it was less than a predetermined fraction of the expected total regeneration time, ECU 14 decides at instant t2c that regeneration is necessary and begins regeneration either immediately or as soon as the vehicle is detected to be in an appropriate mission profile. In that case, as shown in Fig. 4, the temperature curve of the regeneration process of Fig. 3 is repeated completely and identically from t2c to t5.

In the diagrams of Fig. 3 and 4, the target temperature Tt is shown to change abruptly at instants t1, t2, t3, t4, t5. Of course, instead of such an abrupt step, a continuous change of temperature as between instants t0 and t1 might be provided. It is also conceivable to have the target temperature Tt increasing continuously all over the soot burning time from t2 to t5.

### Reference signs

| | |
|---|---|
| combustion chamber | 1 |
| piston | 2 |
| intake manifold | 3 |
| air flow meter | 4 |
| throttle valve | 5 |
| EGR valve | 6 |
| fuel injection valve | 7 |
| exhaust duct | 8 |
| exhaust catalyst | 9 |
| exhaust reduction line | 10 |
| turbine | 11 |
| particulate filter | 12 |
| temperature sensor | 13 |
| ECU | 14 |
| characteristics | 15, 16, 17 |
| temperature setting unit | 18 |
| closed loop controller unit | 19 |
| adder | 20 |
| open-loop controller unit | 21 |

## Claims

1. A method for operating a particulate filter (12) in the exhaust system of an internal combustion engine, comprising a filtering phase in which particles from exhaust gas of the combustion engine are collected in the filter (12), and a regenerating phase (t0-t5) in which a current temperature (Ts) of the filter is measured and heating power applied to the filter (12) is controlled based on a deviation between the measured temperature (Ts) and a target value (Tt) for the temperature of the filter (12) so as to minimize said deviation, in order to burn particles collected in the filter, wherein the regenerating phase comprises a filter cleaning phase (t1-t5) in which the filter is held in a temperature range in which the collected particles will burn, and a heating phase (t0-t1) in which the filter (12) is heated from a filtering phase temperature to a temperature in said temperature range, **characterized in that** in said heating phase (t0-t1), the target value (Tt) is gradually increased from a filtering phase temperature to a temperature in said range.

2. The method of claim 1, wherein the target temperature (Tt) is held constant if the deviation between target and measured temperatures exceeds a given threshold.

3. The method of claim 1 or 2, wherein during a main portion (t2-t5) of the filter cleaning phase (t1-t5), the target temperature (Tt) is gradually raised.

4. The method of claim 3, wherein during said main portion (t2-t5) the target temperature (Tt) is raised by at least 100°C.

5. The method of claim 3 or 4, wherein at the beginning (t2-t3) of the main portion (t2-t5) the target temperature (Tt) is in a range of 530-580°C.

6. The method of one of claims 3 to 5, wherein at the end (t4-t5) of the main portion (t2-t5) the target temperature is above 700°C.

7. The method of one of claims 1 to 6, wherein the filter cleaning phase comprises (t1-t5) an ignition portion (t1-t2) prior to said main portion (t2-t5), and that the target temperature (Tt) is set lower at the beginning (t2-t3) of the main portion (t2-t5) than in the ignition portion (t1-t2) . '

8. The method of claim 7, wherein the duration of said ignition portion (t1-t2) is not more than one minute.

9. The method of claim 7 or 8, wherein the target temperature (Tt) during said ignition portion (t1-t2) is at least 50°C higher than at the beginning (t2-t3) of the main portion (t2-t5).

10. The method of one of the preceding claims, wherein a regeneration phase that was interrupted by a turn-off of the engine is restarted after turn-on of the engine.

11. The method of claim 10, wherein upon turn-on of the engine it is decided to re-start or not to re-start the regeneration phase according to an estimated particle load at the time (t2b, t2c) of interruption.

12. The method of one of the preceding claims, wherein the filter temperature (Ts) is measured at an input port of the filter.

13. The method of one of the preceding claims, wherein the filter (12) is heated by burning residual fuel contained in the exhaust gas from the engine in a catalyst (9) located in the exhaust system between the engine and the filter (12).

14. The method of claim 13, wherein the amount of residual fuel is controlled by metering fuel into a combustion chamber of the engine after ignition.

15. The method of one of the preceding claims, comprising the steps of judging whether the engine is in a low idle state or in a load state, and if the engine is detected to be in the low idle state, setting the target temperature (Tt) lower than in the load state.

16. The method of claim 15, wherein during the low idle state the target temperature (Tt) is gradually decreased.

17. The method of claim 15 or 16, wherein the target Temperature (Tt) is gradually increased when returning from the low idle state to the load state.

18. A data processor program product comprising a data carrier in which program instructions for enabling a data processor to carry out the method of one of claims 1 to 17 are recorded in machine-readable form. -

19. An apparatus for controlling regeneration of a particulate filter (12) in the exhaust system of an internal combustion engine, comprising heating power control means (14) for controlling heating power applied to the filter (12) based on a deviation between the measured temperature (Ts) and a target value (Tt) for the temperature of the filter (12) so as to minimize said deviation, in order to burn particles collected in the filter, wherein the regeneration comprises a filter cleaning phase (t1-t5) in which the filter is held in a temperature range in which the collected particles will burn, and a heating phase (t0-t1) in which the filter (12) is heated from a filtering phase temperature to a temperature in said temperature range, **characterized in that** said control means (14) is adapted to gradually increase the target value (Tt) in said heating phase (t0-t1) from a filtering phase temperature to a temperature in said range in which the collected particles will burn.

## Patentansprüche

1. Regelungsverfahren für einen Partikelfilter (12) in der Abgasanlage einer Verbrennungsmaschine, umfassend eine Filterungsphase, in der Partikel vom Abgas der Verbrennungsmaschine im Filter (12) gesammelt werden, und eine Regenerierungsphase (t0-t5), in der eine aktuelle Temperatur (Ts) des Filters gemessen wird und die auf den Filter (12) aufgebrachte Wärmeleistung auf Basis einer Abweichung zwischen der gemessenen Temperatur (Ts) und einer Zieltemperatur (Tt) für die Temperatur des Filters (12) gesteuert wird, um diese Abweichung zu minimieren, um die in dem Filter gesammelten Partikel zu verbrennen, wobei die Regenerierungsphase eine Filterreinigungsphase (t1-t5) umfasst, in der der Filter in einem Temperaturbereich gehalten wird, in dem die gesammelten Partikel verbrennen, und eine Erhitzungsphase (t0-t1), in der der Filter (12) von einer Filterphasentemperatur auf eine Temperatur in diesem Temperaturbereich erwärmt wird, **dadurch gekennzeichnet, dass** in der Erhitzungsphase (t0-t1) der Zielwert (Tt) schrittweise von einer Filterphasentemperatur auf eine Temperatur in diesem Bereich erhöht wird.

2. Verfahren gemäß Anspruch 1, wobei die Zieltemperatur (Tt) konstant gehalten wird, wenn die Abweichung zwischen Ziel- und Messtemperatur einen bestimmten Schwellwert überschreitet.

3. Verfahren gemäß Anspruch 1 oder 2, wobei während eines Hauptabschnitts (t2-t5) der Filterreinigungsphase (t1-t5) die Zieltemperatur (Tt) schrittweise angehoben wird.

4. Verfahren gemäß Anspruch 3, wobei während des Hauptabschnitts (t2-t5) die Zieltemperatur (Tt) um mindestens 100°C angehoben wird.

5. Verfahren gemäß Anspruch 3 oder 4, wobei zu Beginn (t2-t3) des Hauptabschnitts (t2-t5) die Zieltemperatur (Tt) in einem Bereich von 530-580°C liegt.

6. Verfahren gemäß einem der Ansprüche 3 bis 5, wobei zum Ende (t4-t5) des Hauptabschnitts (t2-t5) die Zieltemperatur über 700°C beträgt.

7. Verfahren gemäß einem der Ansprüche 1 bis 6, wobei die Filterreinigungsphase (t1-t5) einen Zündungsabschnitt (t1-t2) vor dem Hauptabschnitt (t2-t5) umfasst und die Zieltemperatur (Tt) zu Beginn (t2-t3) des Hauptabschnitts (t2-t5) tiefer eingestellt ist als im Zündabschnitt (t1-t2).

8. Verfahren gemäß Anspruch 7, wobei die Dauer des Zündabschnitts (t1-t2) nicht länger als eine Minute ist.

9. Verfahren gemäß Anspruch 7 oder 8, wobei die Zieltemperatur (Tt) während des Zündabschnitts (t1-t2) mindestens 50°C höher ist als zu Beginn (t2-t3) des Hauptabschnitts (t2-t5)

10. Verfahren gemäß einem der vorangehenden Abschnitte, wobei eine Regenerationsphase, die durch ein Abschalten der Maschine unterbrochen wurde, nach dem Einschalten der Maschine neu gestartet wird.

11. Verfahren gemäß Anspruch 10, wobei nach dem Einschalten der Maschine entschieden wird, die Regenerationsphase neu zu starten oder nicht neu zu starten, je nach einer geschätzten Partikellast zum Zeitpunkt (t2b, t2c) der Unterbrechung.

12. Verfahren gemäß einem der vorangehenden Abschnitte, wobei die Filtertemperatur (Ts) an einer Eingangsöffnung des Filters gemessen wird.

13. Verfahren gemäß einem der vorangehenden Abschnitte, wobei der Filter (12) durch das Verbrennen von im Abgas aus der Maschine enthaltenem, restlichem Brennstoff in einem Katalysator (9) erwärmt wird, der sich in der Abgasanlage zwischen der Maschine und dem Filter (12) befindet.

14. Verfahren gemäß Anspruch 13, wobei die Menge des restlichen Brennstoffs durch Dosieren von Brennstoff in eine Verbrennungskammer der Maschine nach der Zündung geregelt wird.

15. Verfahren gemäß einem der vorangehenden Abschnitte, umfassend die Schritte der Beurteilung, ob sich die Maschine in einem Leerlaufzustand oder in einem Lastzustand befindet, und wenn festgestellt wird, dass sich die Maschine in einem Leerlaufzustand befindet, Einstellen einer Zieltemperatur (Tt), die tiefer als im Lastzustand ist.

16. Verfahren gemäß Anspruch 15, wobei die Zieltemperatur (Tt) während des Leerlaufzustands schrittweise gesenkt wird.

17. Verfahren gemäß Anspruch 15 oder 16, wobei die Zieltemperatur (Tt) bei einer Rückkehr vom Leerlaufzustand in den Lastzustand schrittweise erhöht wird.

18. Datenverarbeitungsprogrammprodukt, das einen Datenträger umfasst, in dem Programmbefehle zur Befähigung eines Datenprozessors zur Durchführung des Verfahrens gemäß einem der Ansprüche 1 bis 17 in maschinenlesbarer Form aufgezeichnet sind.

19. Anlage zur Steuerung der Regeneration eines Partikelfilters (12) in der Abgasanlage einer Verbrennungsmaschine, die ein Wärmeleistungs-Steuerungsmittel (14) zur Steuerung der auf den Filter (12) aufgebrachten Wärmeleistung umfasst, basierend auf einer Abweichung zwischen der gemessenen Temperatur (Ts) und einem Zielwert (Tt) für die Temperatur des Filters (12), um die Abweichung zu minimieren, um die im Filter gesammelten Partikel zu verbrennen, wobei die Regeneration eine Filterreinigungsphase (t1-t5) umfasst, in der der Filter in einem Temperaturbereich gehalten wird, in dem die gesammelten Partikel verbrennen, und eine Erhitzungsphase (t0-t1), in der der Filter (12) von einer Filterphasentemperatur auf eine Temperatur in diesem Temperaturbereich erwärmt wird, **dadurch gekennzeichnet, dass** das Steuerungsmittel (14) geeignet ist, den Zielwert (Tt) in der Erhitzungsphase (t0-t1) schrittweise von einer Filterphasentemperatur auf eine Temperatur in diesem Bereich, in dem die gesammelten Partikel verbrennen, zu erhöhen.

## Revendications

1. Procédé pour faire fonctionner un filtre à particules (12) dans le système d'échappement d'un moteur à combustion interne, comprenant une phase de filtration pendant laquelle les particules du gaz d'échappement du moteur à combustion interne sont recueillies dans le filtre (12) et une phase de régénération (t0-t5) pendant laquelle une température actuelle (Ts) du filtre est mesurée et une énergie de chauffage est appliquée au filtre (12) et contrôlée en fonction d'un écart entre la température mesurée (Ts) et une valeur cible (Tt) de la température du filtre (12) afin de minimiser ledit écart, de façon à brûler les particules recueillies dans le filtre, la phase de régénération comprenant une phase de nettoyage du filtre (t1-t5) pendant laquelle le filtre est maintenu dans une plage de température dans laquelle les particules recueillies brûlent et une phase de chauffe (t0-t1) pendant laquelle le filtre (12) est chauffé d'une température en phase de filtration à une température comprise dans ladite plage de températures, **caractérisé en ce que** pendant ladite phase de chauffe (t0-t1), la valeur cible (Tt) est progressivement augmentée d'une température en phase de filtration à une température entrant dans ladite plage.

2. Procédé selon la revendication 1, dans lequel la température cible (Tt) est maintenue constante si l'écart entre la température cible et les températures mesurées dépasse un certain seuil.

3. Procédé selon la revendication 1 ou 2 dans lequel, pendant une partie principale (t2-t5) de la phase de nettoyage du filtre (t1-t5), la température cible (Tt) est progressivement augmentée.

4. Procédé selon la revendication 3 dans lequel, pendant ladite partie principale (t2-t5), la température cible (Tt) est augmentée d'au moins 100°C.

5. Procédé selon la revendication 3 ou 4 dans lequel, au début (t2-t3) de la partie principale (t2-t5), la température cible (Tt) se situe dans une plage de 530°C à 580°C.

6. Procédé selon l'une des revendications 3 à 5 dans lequel, à la fin (t4-t5) de la partie principale (t2-t5), the température cible est supérieure à 700°C.

7. Procédé selon l'une des revendications 1 à 6, dans lequel la phase de nettoyage du filtre (t1-t5) comprend une partie d'allumage (t1-t2) avant ladite partie principale (t2-t5), et en ce que la température cible (Tt) est réglée plus bas au début (t2-t3) de la partie principale (t2-t5) que dans la partie d'allumage (t1-t2).

8. Procédé selon la revendication 7, dans lequel la durée de ladite partie d'allumage (t1-t2) ne dépasse pas une minute.

9. Procédé selon la revendication 7 ou 8, dans lequel la température cible (Tt) pendant ladite partie d'allumage (t1-t2) est supérieure d'au moins 50°C à celle du début (t2-t3) de la partie principale (t2-t5) .

10. Procédé selon l'une des revendications précédentes, dans lequel une phase de régénération qui a été interrompue par l'arrêt du moteur est relancée après le démarrage du moteur.

11. Procédé selon la revendication 10 dans lequel, au démarrage du moteur, le système décide de relancer ou de ne pas relancer la phase de régénération en fonction d'une charge de particules estimée au moment (t2b, t2c) de l'interruption.

12. Procédé selon l'une des revendications précédentes, dans lequel la température du filtre (Ts) est mesurée au niveau d'un orifice d'entrée du filtre.

13. Procédé selon l'une des revendications précédentes, dans lequel le filtre (12) est chauffé en brûlant le carburant résiduel contenu dans le gaz d'échappement provenant du moteur dans un catalyseur (9) situé dans le système d'échappement entre le moteur et le filtre (12).

14. Procédé selon la revendication 13, dans lequel la quantité de carburant résiduel est contrôlée en dosant du carburant dans une chambre de combustion du moteur après l'allumage.

15. Procédé selon l'une des revendications précédentes, comprenant les étapes de détermination de l'état de point mort ou de charge du moteur et, si le moteur est détecté au point mort, de réglage de la température cible (Tt) plus bas que dans l'état de charge.

16. Procédé selon la revendication 15 dans lequel, dans l'état au point mort, la température cible (Tt) est réduite progressivement.

17. Procédé selon la revendication 15 ou 16, dans lequel la température cible (Tt) est augmentée progressivement lors du retour de l'état au point mort à l'état de charge.

18. Programme pour un processeur de données comprenant un support de données dans lequel des instructions de programmation permettant à un processeur de données d'exécuter le procédé selon l'une des revendications 1 à 17 sont enregistrées sous une forme pouvant être lue par une machine.

19. Appareil pour le contrôle de la régénération d'un filtre à particules (12) dans le système d'échappement d'un moteur à combustion interne, comprenant un moyen de contrôle de l'énergie de chauffage (14) destiné à contrôler l'énergie de chauffage appliquée au filtre (12) en fonction d'un écart entre la température mesurée (Ts) et une valeur cible (Tt) de température du filtre (12) afin de minimiser ledit écart, de façon à brûler les particules recueillies dans le filtre, dans lequel la régénération comprend une phase de nettoyage du filtre (t1-t5) pendant laquelle le filtre est maintenu dans une plage de températures dans laquelle les particules recueillies brûlent et une phase de chauffage (t0-t1) pendant laquelle le filtre (12) est chauffé d'une température en phase de filtration à une température située dans ladite plage de température, **caractérisé en ce que** ledit moyen de contrôle (14) peut augmenter graduellement la valeur cible (Tt) pendant ladite phase de chauffage (t0-t1) d'une température en phase de filtration à une température entrant dans ladite plage dans laquelle les particules recueillies brûlent.
